# EUROPÄISCHE PATENTSCHRIFT

(11) **EP 1 249 412 B1**
(45) Veröffentlichungstag und Bekanntmachung des Hinweises auf die Patenterteilung: **30.06.2004**
(21) Anmeldenummer: 02009553.5
(22) Anmeldetag: 19.03.1999
(51) Int. Cl.: B65G 57/16

(54) **Stapelhalteeinrichtung mit Greifklinke**
Stack holding device with grasping pawl
Dispositif de maintien d'une pile d'objets avec pince à cliquet

(43) Veröffentlichungstag der Anmeldung: 16.10.2002
(62) Teilanmeldung aus: 99915675.5
(73) Patentinhaber: Lauermann, Walter, 97320 Estenfeld (DE)
(72) Erfinder: Lauermann, Walter, 97320 Estenfeld (DE)
(74) Vertreter: Götz, Georg, Dipl.-Ing.

(56) Entgegenhaltungen:
- DE-A- 3 624 683
- GB-A- 1 358 788
- US-A- 5 069 019
- US-A- 5 192 181

## Beschreibung

Die Erfindung betrifft eine Stapelhalteeinrichtung, die mindestens einen Stapelkanal und ein oder mehrere Krallorgane aufweist, welches oder welche parallel zum Stapelkanal verlaufen, diesen umgeben und auf ihrer dem Stapelkanal zugewandten Innenseite mit einem oder mehreren, jeweils rotatorisch und/oder translatorisch verstellbaren Greifklinken zum Erfassen von Serienstückgütern, insbesondere Kunststoffbechern, versehen sind, gemäß Oberbegriff des Anspruchs 1. Weiter betrifft die Erfindung eine zum Einsatz in der Stapeleinrichtung geeignete Greifklinke, die eine einem zu ergreifenden Erzeugnis bzw. Stapelgut zugeordnete Innenseite und eine rückwärtige Außenseite besitzt, wobei auf der Innenseite eine oder mehrere Hinterschneidungen, Stufen oder Vertiefungen als Krallelemente oder Schubmittel für das Erzeugnis oder Stückgut gebildet sind, gemäß Oberbegriff des Anspruchs 5.

Zur Herstellung von Kunststoffbechern im Tiefziehverfahren ist der Einsatz von Polystyrol als Werkstoff bekannt. Dieser wird zunehmend verdrängt durch Polypropylen, das als preiswerter Werkstoff zur Verfügung steht, jedoch schwieriger verarbeitbar ist. Ein daraus gefertigter Artikel erreicht erst Stunden nach seiner Herstellung seine endgültige Festigkeit. Es ist deshalb besonders wichtig, die aus dem Werkzeug ausgeschobenen - weichen - Artikel beim anschließenden Stapelvorgang vor mechanischen Belastungen in axialer und radialer Richtung weitestgehend zu schützen.

Aus DE-A-36 24 683 ist eine Rückhaltevorrichtung für einen Stapelkanal bekannt, wobei mittels den Stapelkanal begrenzenden Führungsstangen Deckel für Kunststoffbehälter gehalten werden. Die Rückhaltevorrichtung zeichnet sich durch Klinken aus, die in die Führungsstangen integriert und über Druckfedern radial federnd gelagert sind. Die Vorderseite der federnden Klinken ist dem Inneren des Stapelkanals zugewandt und besteht aus flachen Flanken, die in sägezahnartiger Reihenfolge angeordnet sind, so daß sich im Bereich der tiefer gelegenen Teile dieser Flanken in Querrichtung verlaufende Vorsprünge für die Ränder der zu haltenden Deckel herausbilden. Allerdings liegen die Vorsprünge einander derart diametral gegenüber, daß Engpässe gebildet werden, die zu einer Verformung der Deckel führen.

Im praktischen Dauerbetrieb können Unregelmäßigkeiten in der Erzeugnis- oder Stapelgutform, insbesondere beim aus einem Formwerkzeug ausgeworfenen Becher auftreten. Dies kann zur Beeinträchtigung der Übergabe zwischen Fangund Stapelhalteeinrichtung führen, wobei sogar miteinander kollidierende Greifkörper von der Fang- und Stapelhalteeinrichtung, gegebenenfalls in Wirkverbindung mit verbliebenen Erzeugnissen oder Stückgütern, zu mechanischen Beschädigungen oder Verformungen führen können.

Zur Lösung dieser Problematik wird die im Anspruch 1 angegebene Stapelhalteeinrichtung erfindungsgemäß vorgeschlagen. Demnach ist die Greifklinke um eine Achse frei drehbar gelagert ist, die parallel zum Stapelkanal verläuft. Durch die freie Verdrehbarkeit kann sich die Greifklinke zum Erfassen des Stückguts an dessen Herstellungskontur oder -gestalt weitgehend formbündig oder formschlüssig anschmiegen. Bei der vorherigen Montage der Stapelhalteeinrichtung ist es nicht mehr notwendig, die Greifklinke in ihrer Drehstellung exakt auszurichten, dies erfolgt vielmehr bei jedem zu stapelnden Stückgut von neuen und selbsttätig. Durch den rotatorischen Freiheitsgrad um eine insbesondere achsparallele Drehachse läßt sich ein Stapelkanal bilden, der sich gleichsam dynamisch an Formabweichungen des Stapelguts in bestimmtem Umfang anpassen kann. Der Stapelkanal "atmet" gleichsam mit den aus Formwerkzeug und Fangeinrichtung herrührenden und dem zu stapelnden Stückgut eingeprägten Formtoleranzen. Es wird der weitere Vorteil erzielt, daß im Falle einer Kollision eines Greifkörpers der Fangeinrichtung mit dem Krallorgan bzw. dessen Greifklinke an der Stapelhalteeinrichtung die Greifklinke in bestimmten Umfang durch entsprechende Drehung ausweichen kann. So ist eine Kollision zwischen Greifkörpern an Fang- und Stapelhalteeinrichtung kompensiert und mechanischen Verformungen der Greifkörper vorgebeugt.

Zur weiteren Formstabilisierung der Greifkörper an Fang- und Stapelhalteeinrichtung (Klemmdorne bzw. Krallorgane) ist nach der Erfindung die Greifklinke von einer Schutzwandung umgeben, welche derart ausgebildet und mit einem Abstand gegenüber der Greifklinke angeordnet ist, daß die der Greifklinke zugewandte Innenseite der Schutzwandung einen Drehbegrenzungsanschlag mit Drehspiel für die Greifklinke bildet. Damit ist verhindert, daß sich die Greifklinke zu weit gegenüber der optimalen Greifstellung verdrehen kann und dabei ein querstehendes Hindernis für das ankommende Stapelgut bildet und dieses mechanisch verformt.

Nach einer zweckmäßigen Ausbildung ist die Drehachse der Greifklinke in der Schutzwandung eingebettet bzw. darin undrehbar gehalten und trägt an ihrem freien, aus der Schutzwandung parallel zum Stapelkanal herausragenden Ende die Greifklinke in frei drehbarer Lagerung.

Um für die Greifklinke ein Drehspiel gegenüber dem Grundkörper der Stapelhalteeinrichtung, insbesondere gegenüber der Schutzwandung, zu ermöglichen, ist es zweckmäßig, die Greifklinkendrehachse mit Arretiermitteln zu versehen, die mit dem Grundkörper bzw. der Schutzwandung der Stapelhalteeinrichtung koppelbar und/oder in Eingriff bringbar sind. Um die Arretiermittel an der Greifklinkendrehachse betätigen zu können, ist nach einer vorteilhaften Ausbildung der Erfindung vorgesehen, daß die Schutzwandung auf ihrer (der Greifklinke zugewandten) Innenseite mit einer zur Drehachse führenden, bevorzugt radial bezüglich dem Stapelkanal verlaufenden Öffnung oder Aussparung versehen ist. Darüber können die genannten Arretierungsmittel der Drehachse zu deren Feststellung gegenüber den sonstigen Stapelhalteeinrichtungsmaterial betätigt werden.

Im Rahmen der allgemeinen erfinderischen Idee zur Lösung des erfindungsgemäßen Aufgabenkomplexes wird die im Anspruch 5 angegebene Greifklinke erfindungsgemäß vorgeschlagen. Demnach ist diese mit einer körpereigenen Drehachse versehen, die mit einem länglichen Basiskörper realisiert ist, der ein Kopf- und ein Fußende aufweist. Am Kopfende ist ein dem jeweiligen Stapelgut zugeordneter Greifkopf frei drehbar angebracht. Am Fußende und/oder auch im mittleren Bereich des Basiskörpers sind Mittel zur Arretierung an oder gegenüber der Stapelhalteeinrichtung ausgebildet. Durch letztere läßt sich die Greifklinkendrehachse innerhalb des Grundkörpers der Stapelhalteeinrichtung unverdrehbar festlegen. Auf der Drehachse bzw. dem länglichen Basiskörper kann sich dann der Greifkopf gegenüber dem sonstigen Teil der Stapelhalteeinrichtung hin- und herverdrehen.

Damit auch weitere, flexible Freiheitsgrade für den Greifkopf zum Anschmiegen an vielfältige Formen und Konturen des Stapelguts gegeben sind, besteht eine Ausbildung der Erfindung darin, daß der längliche Basiskörper mit elastisch und/oder federnd biegsamen Material hergestellt ist. Es wird gleichsam ein elastisch biegsamer Stiel gebildet, auf dem der Greifkopf aufgrund Einwirkung durch Stapelgüter federnd ausgelenkt und wieder pendelartig in seine Ausgangsstellung zurückgelangen kann.

Mit der erfindungsgemäßen Struktur für die Greifklinke, die im wesentlichen in den Greifkopf und den länglichen, stielartigen Basiskörper als Drehachse untergliedert ist, ist der Weg zu einer weiteren vorteilhaften Ausbildung eröffnet, wonach der Greifkopf am Basiskörper lösbar bzw. abnehmbar montiert sein kann und gleichzeitig auf seiner Greifinnenseite in der dortigen Form oder Krümmung an die Form und/oder Kontur und/oder Krümmung des zu erfassenden Stapelguts angepaßt ist. Der produktions- und lagertechnische Vorteil besteht darin, daß für den länglichen Basiskörper als Drehachse eine für alle Anwendungen passende Standardform beibehalten werden kann. Auf den Basiskörper können dann - je nach Stapelgutform - unterschiedlich geformte bzw. gestaltete Greifköpfe montiert werden.

Zur Realisierung einer einfachen Drehlagerung für den Greifkopf ist es zweckmäßig, diesen auf dem Kopfende über eine Schraubverbindung hin- und herdrehbar anzuordnen. Damit das Drehspiel erzielt wird, darf der Greifkopf auf dem Kopfende nicht fest verschraubt bzw. angezogen werden.

Eine zweckmäßige Realisierung der Arretierungsmittel besteht darin, einen manuell schraubbaren Außengewindestift in einer Innengewindebohrung anzuordnen, welche im mittleren Bereich oder am Fußende des Basiskörpers realisiert ist und diesen quer zur Längsachse durchsetzt. Um das Drehspiel zu erhalten, ist in weiterer Ausbildung ein Einschraubbegrenzungsanschlag auf dem Basiskörper für den Greifkopf zweckmäßig. Dieser ist mit einem zum Einschraubgewinde am Kopfende des Basiskörpers (für den Greifkopf) derart bemessenen Abstand angeordnet, daß bei Anschlag bzw. Anliegen des Greifkopfes am Begrenzungsanschlag die Mittelachse der Innengewindebohrung parallel zu einer gedachten Geraden verläuft, welche eine dem Stück- bzw. Stapelgut zugeordnete Seitenoberfläche des Greifkopfes in einem schrägen Winkel durchsetzt. In Verbindung mit der soeben genannten Schraubverbindung zwischen Greifkopf und Kopfende, der radialen Betätigungsöffnung zu den Arretierungsmitteln der Drehachse und dem oben genannten Drehbegrenzungsanschlag wird bei Gewährleistung des Drehspiels für den Greifkopf gleichzeitig verhindert, daß dieser sich vom Basiskörperkopfende herausschrauben kann. Zudem muß, damit eine Betätigung der Arretierungsmittel möglich ist, die Mittelachse der Innengewindebohrung bzw. des Außengewindestiftes mit der Längs- bzw. Zugangsrichtung der Betätigsöffnung oder -aussparung bündig bzw. in einer Flucht bzw. deckungsgleich liegen.

Dadurch ist bei der letztgenannten Erfindungsausbildung das Dreh- und Schraubspiel für den Greifkopf auf dem Basiskörperkopfende immer gewährleistet.

Weitere Merkmale, Einzelheiten, Vorteile und Wirkungen auf der Basis der Erfindung ergeben sich aus der nachfolgenden Beschreibung bevorzugter Ausführungsbeispiele sowie aus den Zeichnungen. Diese zeigen in:
- Fig. 1: eine in radialer Richtung vorgenommene Ansicht auf den achsparallelen Umfang einer rotationssymmetrischen Anordnung aus Fang- und Stapelhalteeinrichtung einer Aufnahmevorrichtung,
- Fig. 2a und 2b: jeweils eine teilweise längsaxial geschnittene Ansicht einer Ausführung eines Klemmdorns für eine Fangeinrichtung,
- Fig. 3: einen axialen Längsschnitt der Stapelhalteeinrichtung gemäß Fig. 1,
- Fig. 4: eine axial vorgenommene Schnittansicht,
- Fig. 5: eine radial vorgenommene Ansicht auf den Umfang einer weiteren Ausführung der Aufnahmevorrichtung,
- Fig. 6: eine Schnittansicht gemäß Linie VI-VI in Fig. 5,
- Fig. 7: eine Vorderansicht auf eine Fangplatte mit einer Vielzahl von Fangzellen einer weiteren Ausführung der Aufnahmevorrichtung,
- Fig. 8: eine Draufsicht auf die entsprechende Stapelplatte der Aufnahmevorrichtung nach Fig. 7,
- Fig. 9: eine Draufsicht auf eine Ausbildung der erfindungsgemäßen Stapelhalteeinrichtung,
- Fig. 10: die Stapelhalteeinrichtung nach Figur 9 im axialen Längsschnitt gemäß Linie X-X in Figur 9,
- Fig. 11: eine Figur 6 entsprechende Schnittansicht der Ausbildung der Erfindung gemäß Figuren 9 und 10,
- Fig. 12: eine Figur 8 entsprechende Draufsicht auf die weitere Ausführungsform der erfindungsgemäßen Stapelplatte gemäß Figuren 9 - 11.

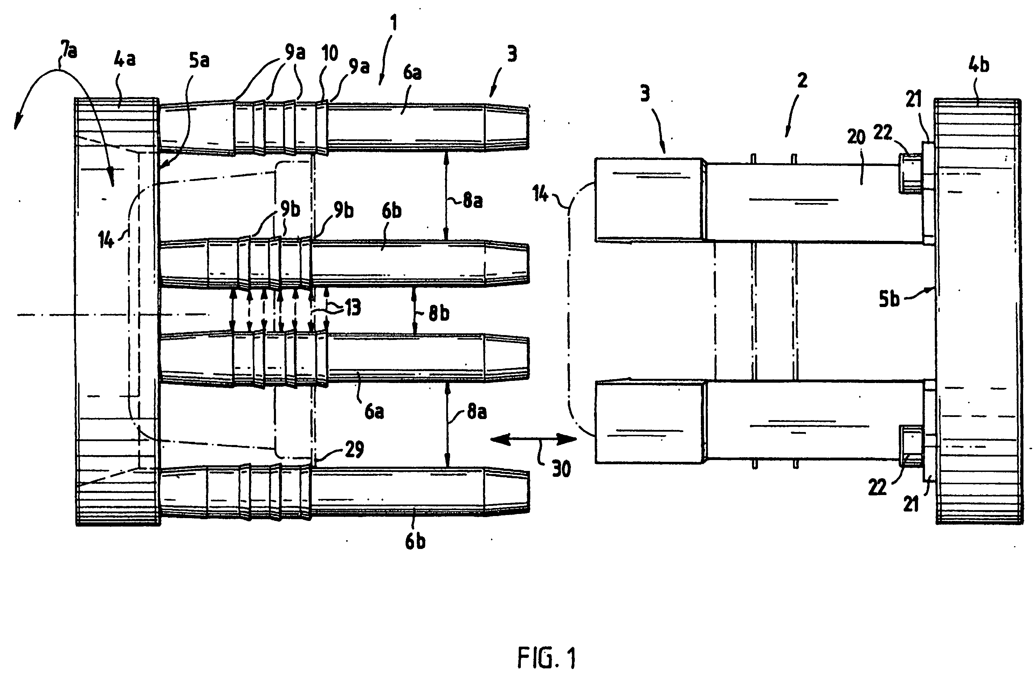

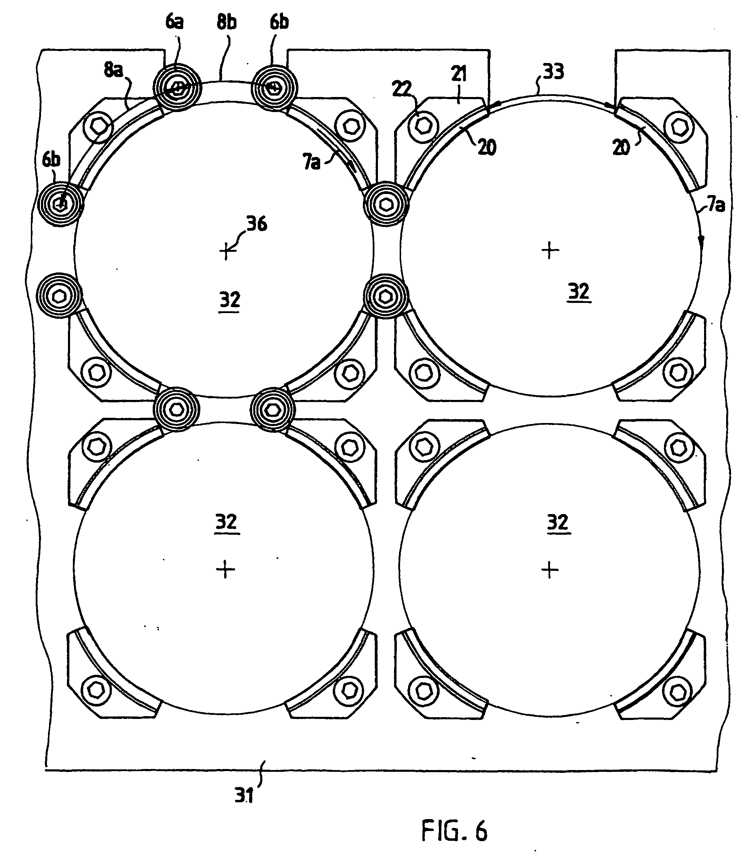

Gemäß Fig. 1 besteht die Aufnahmevorrichtung aus einer Fangeinrichtung 1 und einer Stapelhalteeinrichtung 2, die einander gegenüberliegen. Deren aufeinandergerichtete Greifkörper 3 sind auf einem ersten Tragring 4a oder einer Tragplatte mit Durchbruch der Fangeinrichtung 1 und einem zweiten Tragring 4b oder einer Tragplatte mit Durchbruch der Stapelhalteeinrichtung 2 über deren jeweilige, gegenüberliegende Stirnseiten 5a, 5b verteilt befestigt. Die Greifkörper 3 der Fangeinrichtung 1 sind als von der Stirnseite 5a vorspringende Klemmdorne 6a, 6b mit rundlichem Grundquerschnitt realisiert. Wie auch die weiter unten erläuterte Fig. 6 erkennen läßt, sind insgesamt acht Klemmdorne 6a, 6b vorgesehen. Sie weisen voneinander in Umfangsrichtung 7a des Tragrings 4a abwechselnd einen ersten, größeren Abstand 8a und einen zweiten kleineren Abstand 8b voneinander auf. So bilden sich vier Gruppen mit jeweils einem Klemmdornpaar 6a, 6b. Die beiden, paarweise gruppierten und den kleineren Abstand 8b voneinander aufweisenden Klemmdorne 6a, 6b unterscheiden sich voneinander im wesentlichen durch eine Anzahl von vier Schnappstufen 9a einerseits und von drei Schnappstufen 9b andererseits.

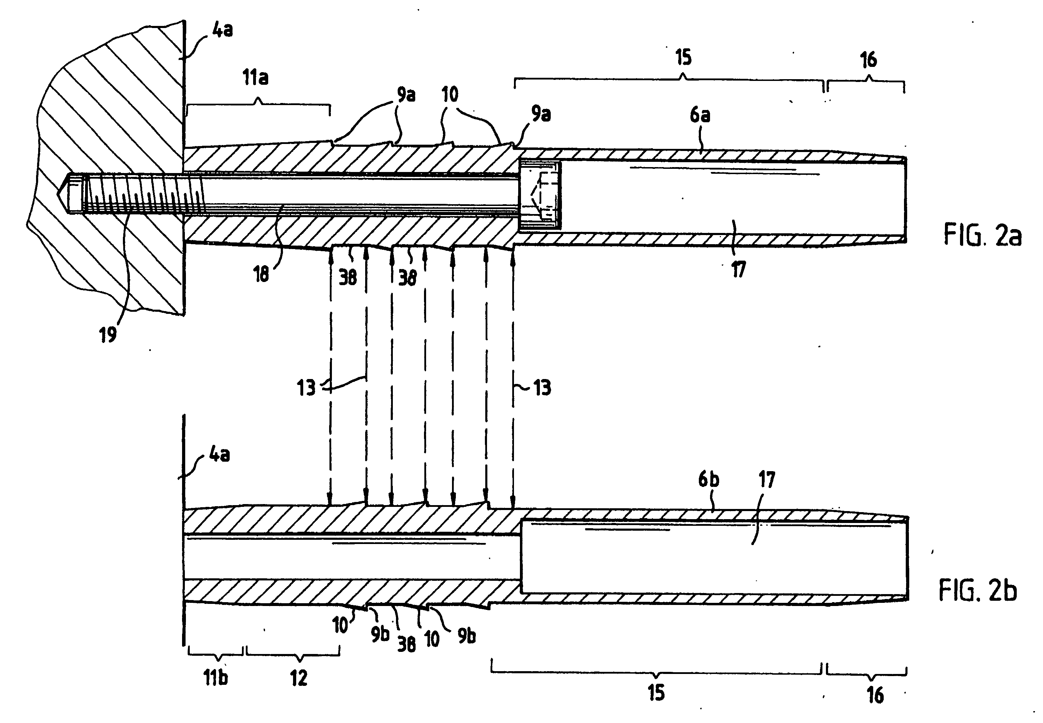

In Fig. 2a und Fig. 2b sind diese vergrößert dargestellt. Die Schnappstufen 9a, 9b bilden jeweils den Abschluß von rampenartigen Umfangserweiterungen 10, allerdings mit einer Ausnahme: Bei dem Klemmdom 6a mit vier Schnappstufen 9a bildet die erste Schnappstufe 9a, die dem Tragring 4a am nächsten liegt, den Abschluß eines sich vom Tragring 4a aus kontinuierlich in axialer Richtung erweiternden Umfangsabschnitts 11a. Beim Klemmdorn 6b mit drei Schnappstufen 9b dagegen ist ein gleichartiger, sich vom Tragring 4a aus erweiternder Umfangsabschnitt 11b vorgesehen, der in einen achsparallelen Umfangsabschnitt 12 übergeht. An diesen schließt sich - in weiterer Entfernung vom Tragring 4a - die erste der bereits genannten rampenartigen Umfangserweiterungen 10 an. Wie mit gestrichelten Linien 13 angedeutet, sind die Schnappstufen 9a des einen Klemmdorns 6a gegenüber den Schnappstufen 9b des anderen Klemmdorns 6b axial versetzt. Gemäß gezeichnetem Beispiel ergeben sich damit insgesamt sieben Einschnappmöglichkeiten für einen (in Fig. 1 strichpunktiert angedeuteten) Kunststoffbecher 14. Indem also einer Schnappstufe 9a, 9b eines Klemmdorns 6a stets ein achsparalleler Umfangsabschnitt 38 des jeweils anderen Klemmdorns 6b gegenüberliegt, wird ein zu starkes Einklemmen und damit eine Deformation des Kunststoffbechers 14 vermieden, wenn dieser aus einem Formwerkzeug zwischen die Klemmdorne 6a, 6b der Fangeinrichtung 1 gestoßen wird. Gemäß Fig. 2a und 2b schließt sich - von dem Tragring 4a aus gesehen - nach dem Bereich mit den Schnappstufen 9a, 9b ein achsparalleler Außenumfangsabschnitt 15 auf den Klemmdornen 6a, 6b an. Deren freie Enden sind von einem konischen Verjüngungsabschnitt 16 gebildet. Die Klemmdorne 6a, 6b sind hohlzylindrisch mit einem Hohlraum 17 ausgebildet. Darin ist eine Befestigungsschraube 18 eingeführt, die im wesentlichen den Bereich mit den Schnappstufen 9a, 9b und mit dem Tragring 4a einschließlich durchsetzt. Der Eingriff mit dem Inneren des Tragrings 4a erfolgt über ein entsprechendes Innengewinde und einem Außengewinde 19 der Befestigungsschraube 18.

Gemäß Fig. 1 sind die Greifkörper 3 der Stapelhalteeinrichtung 2 durch Krallvorsprünge 20 realisiert, die über einen L-artig nach außen abgewinkelten Befestigungsflansch 21 und einer diesen durchsetzenden Befestigungsschraube 22 am zugeordneten Tragring 4b fixiert sind. Wie auch die zusätzliche Betrachtung von Fig. 6 zeigt, sind die Krallvorsprünge 20 in Umfangsrichtung 7a derart gekrümmt flächig erstreckt, daß sie - grob abgeschätzt - etwa ein Drittel der Außenumfangsfläche eines aufgenommenen Kunststoffbechers 14 abdecken können.

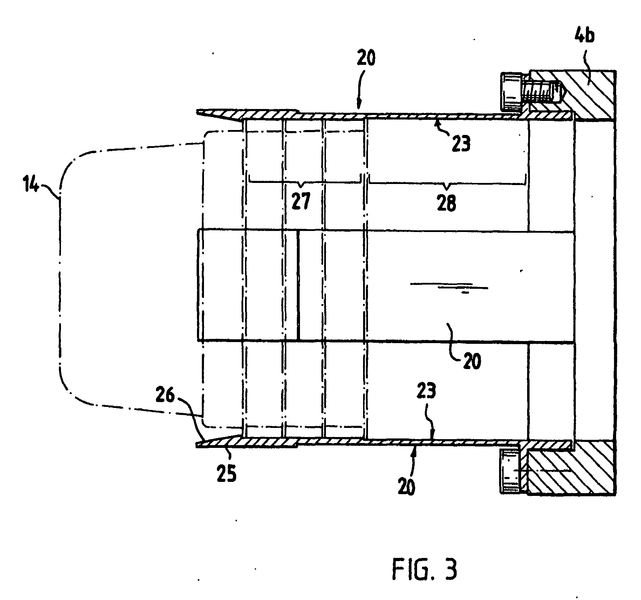

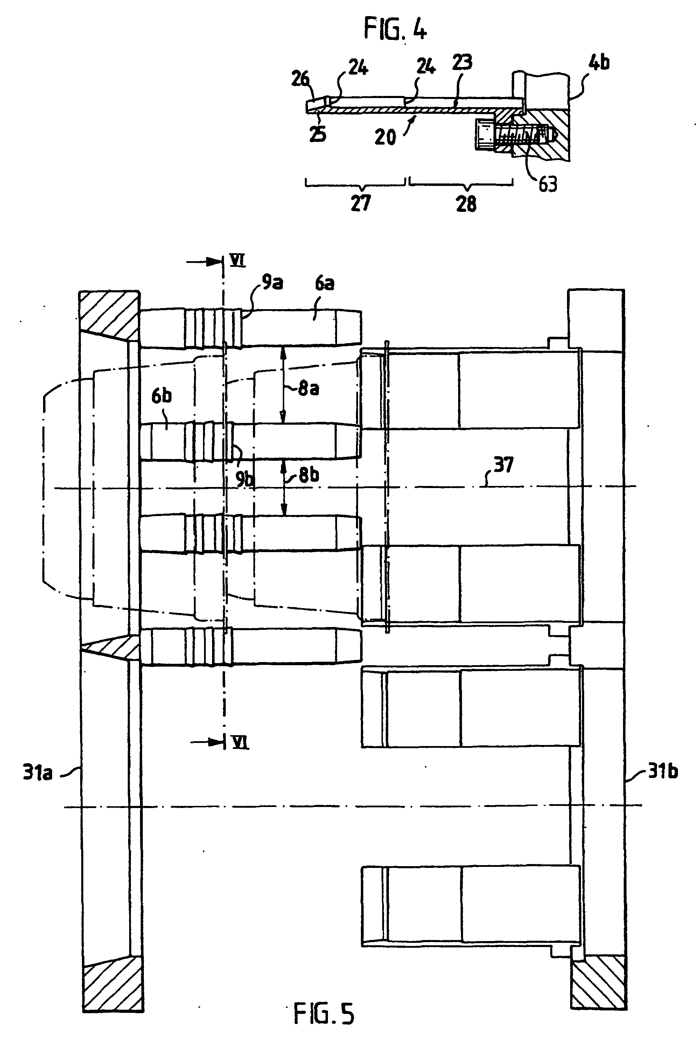

Die Krallwirkung wird aus der Schnittdarstellung gemäß Fig. 3 und 4 besonders deutlich. An der Innenseite 23 des Krallvorsprungs 20 sind wenigstens zwei Widerhakstufen 24 ausgebildet. Die dem freien Ende 25 des Krallvorsprungs 20 nächstliegende Widerhakstufe 24 bildet den Abschluß eines innenseitigen Eingangsrampenabschnitts 26, der mit zunehmender Nähe zum Tragring 4b am Eingang der Stapelhalteeinrichtung eine Verjüngung bzw. Verengung des für den Kunststoffbecher 14 zur Verfügung stehenden Aufnahmevolumens innerhalb der im Beispiel vier Krallvorsprünge 20 bewirkt.

An der dem freien Ende 25 nächstliegenden Widerhakstufe 24 schließt sich ein erster, achsparalleler Innenseitenabschnitt 27 an, der durch die zu dem Tragring 4b nächstliegende Widerhakstufe 24 abgeschlossen wird. An diese schließt sich ein zweiter, ebenfalls achsparalleler Innenseitenabschnitt 28 an, der aufgrund der Abstufung einen größeren Innendurchmesser als der erste Innenseitenabschnitt 27 begrenzt.

Zur Funktionsweise der Aufnahmevorrichtung und insbesondere zum Zusammenspiel von deren Fang- und Stapelhalteeinrichtungen 1, 2 sei folgendes ausgeführt: Gemäß Fig. 1 sind in Umfangsrichtung 7a die Krallvorsprünge 20 der Stapelhalteeinrichtung 2 gegenüber den Klemmdornpaaren 6a, 6b der Fangeinrichtung 1 derart versetzt angeordnet, daß jeder Krallvorsprung 20 zwischen zwei Klemmdorne 6a, 6b, die den größeren Abstand 8a voneinander aufweisen, eingeschoben werden kann. Die flächige Erstreckung in Umfangsrichtung 7a ist bei den Krallvorsprüngen 20 insbesondere oder auch nach diesem Gesichtspunkt bemessen. Befinden sich die Fangeinrichtung 1 und die Stapelhalteeinrichtung 2 im auseinander gefahrenen Zustand,. kann in der ersten Phase des Aufnahmevorgangs der Kunststoffbecher 14 aus dem (nicht gezeichneten) Kunststoff-Formwerkzeug ausgestoßen und zunächst durch den Tragring 4a der Fangeinrichtung zwischen deren Klemmdorne 6a, 6b gestoßen werden. Dabei gleitet der Becher 14 vorzugsweise mit seinem nach außen gestülpten Öffnungsrand 29 zunächst entlang der ersten Umfangsabschnitte 11a, 11b (vgl. Fig. 2a, 2b), dann teilweise auf dem achsparallelen Umfangsabschnitt 12 des Klemmdorns 6b mit drei Schnappstufen 9b solange, bis er hinter der ersten, zweiten, usw. Schnappstufe 9a, 9b zum Stillstand kommt. Der Becher ist dann aufgrund der jeweils entgegenstehenden Schnappstufe nicht mehr zurückbewegbar, und eine weitere Bewegung in Richtung zu den freien Enden der Klemmdome 6a, 6b würde einen weiteren Druck auf den Becher 14 in Richtung zur Stapelhalteeinrichtung 2 erfordern, um die einen oder mehreren Umfangserweiterungen 10 auf den Klemmdornen 6a, 6b zu überwinden. Dies wird in der zweiten Phase von den Krallvorsprüngen 20 der Stapelhalteeinrichtung 2 mittels deren Widerhakstufen 24 bewerkstelligt. Dazu taucht die Stapelhalteeinrichtung 2 mit ihren Krallvorsprüngen 20 in die freien Räume der größeren Abstände 8a zwischen den Klemmdornen 6a, 6b. Dies wird zweckmäßig dadurch realisiert, daß der Fangeinrichtung 1 abwechselnd eine Hinund Herbewegung 30 zwischen dem (nicht gezeichneten) Formwerkzeug und der stillgehaltenen Stapelhalteeinrichtung 2 erteilt wird. Im eingetauchten Zustand, wenn die Fang- und Stapelhalteeinrichtung 1, 2 mit ihren Greifkörpern 3 ineinandergefahren sind, hintergreifen die Krallvorsprünge 20 mit ihren Widerhakstufen 24 den Becher 14 an seinem Öffnungsrand 29, nachdem dieser am innenseitigen Eingangsrampenabschnitt 26 des freien Endes 25 des Krallvorsprungs 20 im Zuge der Bewegung 30 der Fangeinrichtung 1 auf die Stapelhalteeinrichtung 2 entlang geglitten ist. Wird nun die Bewegung 30 zum Auseinanderfahren von Fang- und Stapelhalteeinrichtung 1, 2 umgekehrt, wird der Becher-Öffnungsrand 29 zwischen den Krallvorsprüngen 20 an deren Widerhakstufen 24 festgehalten; gleichzeitig kommt es zur Überwindung der rampenartig ansteigenden Umfangserweiterungen 10 auf den Außenmantelflächen der Klemmdorne 6a, 6b, was nur zu einem geringfügigen, reversiblen Deformieren des Becheröffnungsrandes 29 führt. Sind die Fangeinrichtung 1 und die Stapelhalteeinrichtung 2 vollständig auseinandergefahren, ist der vorher zwischen den Klemmdornen 6a, 6b erfaßte Kunststoffbecher nur noch von den Krallvorsprüngen 20 erfaßt. Im Rahmen eines weiteren Becherübemahmetaktes mit erneutem Ineinanderfahren von Fang- und Stapelhalteeinrichtung 1, 2 wird zwar der zuletzt zwischen den Krallvorsprüngen 20 aufgenommene Becher 14 wieder zwischen die Klemmdorne 6a, 6b der Fangeinrichtung zurück bewegt; jedoch führen der konische Verjüngungsabschnitt 16 (der sich mit zunehmender Nähe zum Tragring 4a verbreitert) und/oder wenigstens die vom Tragring 4a am weitesten entfernte Schnappstufe 9a zu einer weiteren Verschiebung des Bechers 14, der zunächst von der dem freien Ende 25 des Krallvorsprungs 20 nächstliegenden Widerhakstufe 24 gehaltenen war, in Richtung zum Tragring 4b der Stapelhalteeinrichtung 20. Diese (wiederholte) Verschiebung ergibt mit jedem Übemahmezyklus oder -takt eine Vergrößerung des sich innerhalb der Krallvorsprünge bildenden Becherstapels. Eine Rückbewegung in Richtung zur Fangeinrichtung 1 bzw. zum davor angeordneten Formwerkzeug ist durch die beiden Widerhakstufen 24 verhindert. Beim Ineinanderfahren von Fang- und Stapelhalteeinrichtung 1, 2 kommt der zuletzt in der Stapelhalteeinrichtung aufgenommene Becher 14, der sich unmittelbar an der dem freien Ende 25 nächstliegenden Widerhakstufe 24 befindet, mit dem zuletzt aus dem Formwerkzeug ausgestoßenen und zwischen den Klemmdornen 6a, 6b befindlichen Becher 14 nicht in Berührung. Letzterer ist also von einer Stapelverschiebung der zwischen den Krallvorsprüngen 20 gestapelten Becher 14 entkoppelt und wird dadurch nicht deformiert. Bei dem erfindungsgemäßen Übernahmeablauf ist als Zwischenstation lediglich die Fangeinrichtung notwendig.

Gemäß Fig. 5 und 6 ist die Fang- und Stapelhalteeinrichtung jeweils mit einer Grundplatte 31a, 31b realisiert, die "brillenartig" von einer Mehrzahl gleichartiger Aufnahmezellen 32 durchsetzt ist. Jede Zelle umfaßt den von den Klemmdornen 6a, 6b umgebenen Aufnahmeraum und den damit fluchtenden, von dem Krallvorsprüngen 20 umgebenen Aufnahmeraum. Der zeichnerischen Vereinfachung halber sind lediglich die Klemmdorne 6a, 6b einer Aufnahmezelle 32 gezeichnet. Im übrigen bezeichnen die in Fig. 5 und 6 eingetragenen Bezugsziffem mit in Fig. 1-4 übereinstimmende Teile. Es ist ferner erkennbar, daß der Umfangsabstand 33 zwischen zwei Krallvorsprüngen 20 etwa dem Winkelumfang entspricht, den ein Paar mit Klemmdornen 6a, 6b unterschiedlicher Anzahl an Schnappstufen 9a, 9b und kleinerem Abstand 8b voneinander einnimmt.

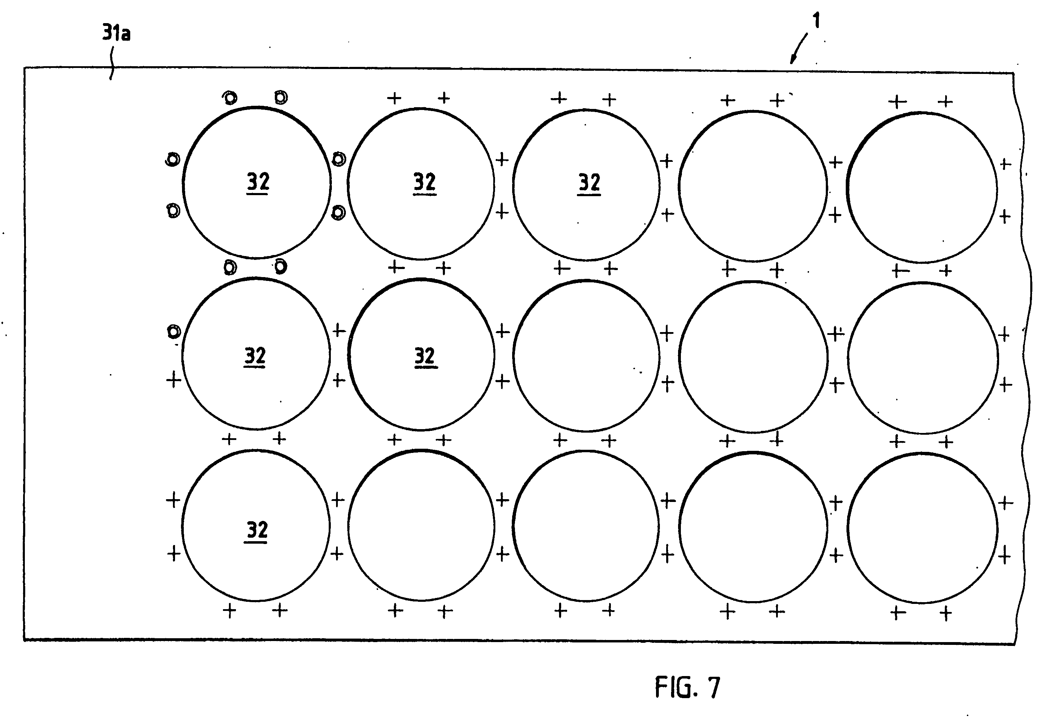

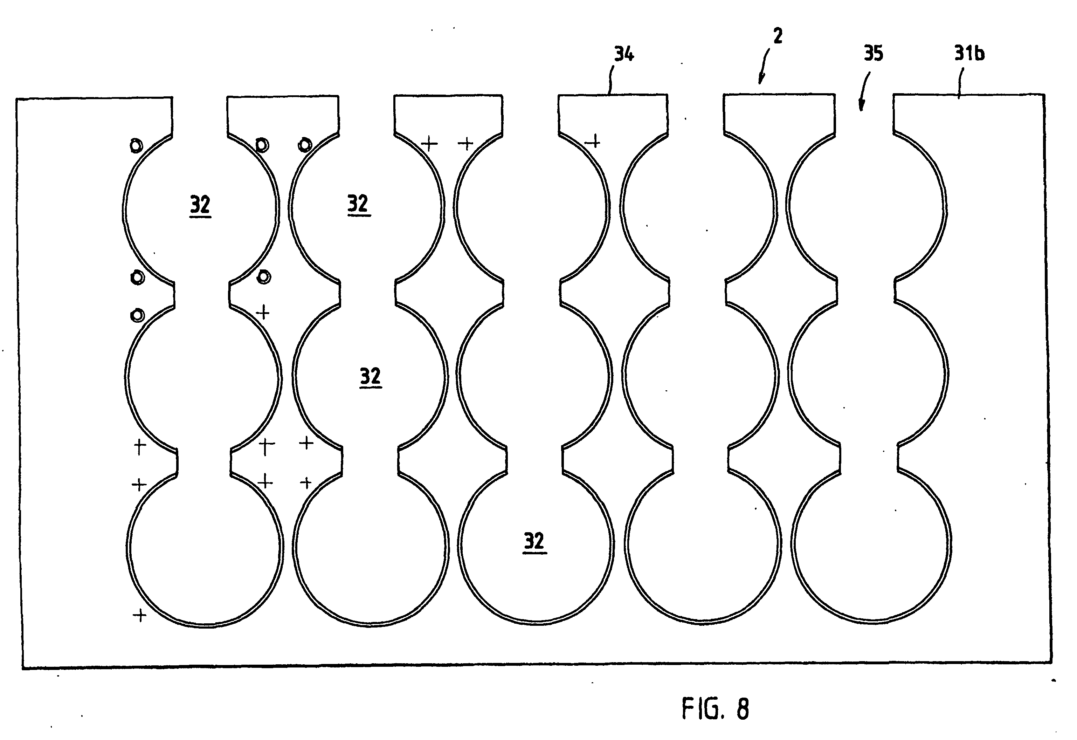

Gemäß Fig. 7 und 8 können in den Grundplatten 31a, 31b eine Vielzahl von Aufnahmezellen 32 angeordnet sein. Die Grundplatte 31b der Stapelhalteeinrichtung bzw. "Stapelbrille" 2 ist zumindest an einem oberen Rand 34 mit Aussparungen 35 versehen, welche Durchgänge für einen an sich bekannten (nicht gezeichneten) Ausschieberechen zum Entfernen von Becherstapeln aus der Stapelhalteeinrichtung 2 schaffen. Im Vergleich dazu sind bei der Grundplatte 31a der Fangeinrichtung bzw. "Fangbrille" 1 solche Aussparungen bzw. Durchbrüche in die Aufnahmezellen 32 nicht notwendig, was die mechanische Gesamtstabilität der Grundplatte 31 a erhöht.

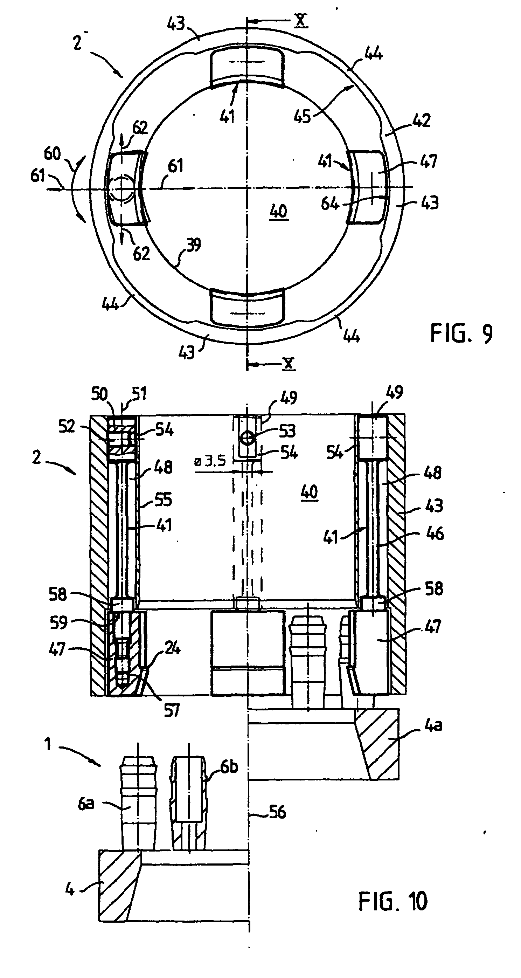

In Figur 9 und 10 ist eine erfindungsgemäße Ausbildung der Stapelhalteeinrichtung 2 dargestellt. Diese ist wesentlich von einem Krallorgan 39 mit etwa ringförmiger bzw. hohlzylindrischer Grundform ausgemacht. Dieses definiert bzw. umgrenzt einen Stapelkanal 40 zylindrischen Querschnittes. Es umfaßt an den Stapelkanal 40 unmittelbar angrenzende, im Beispiel vier Greifklinken 41 sowie eine etwa ring- bzw. hohlzylindrische Schutzwandung 42, welche die Greifklinken 41 von außen umgibt. Über ihren Umfang gleichmäßig verteilt weist die Schutzwandung 42 abwechselnd dickere Mantelabschnitte 43, welche eine Greifklinke 41 unmittelbar von außen radial abdecken, und dünnere Mantelabschnitte 44 auf. Die dünneren Mantelabschnitte 44 sind durch innenseitige Aussparungen bzw. Einbuchtungen 45 gebildet. Diese schaffen Platz zum Eintauchen der Klemmdome 6a,6b auf dem Tragring 4a der Fangeinrichtung 1, wie in Figur 10, rechte Hälfte, dargestellt.

Gemäß Figur 10 besitzen die Greifklinken 42 die Grundstruktur eines federnden Pendels. Die Greifklinke 42 umfaßt einen etwa stielartig ausgebildeten Basisachskörper 46, worauf ein Greifkopf 47 mit wenigstens einer Widerhakstufe 24 montiert ist. Der Basisachskörper ist beispielsweise aus federndem Stahl oder Metall hergestellt und mit seiner stielartigen Grundform in einer Aufnahmetasche 48 untergebracht, die innenseitig jeweils am dickeren Mantelabschnitt 43 der Schutzwandung 42 als radial nach innen vorspringender Hohl-Ansatz angeformt ist. Der Basisachskörper 46 besitzt ein verbreitertes oder radial aufgeweitetes Fußende 49, das von einer Innengewindebohrung 50 quer zur Längsrichtung 51 des Basisachskörpers 46 durchsetzt ist. Im bzw. mit der Innengewindebohrung 50 kämmt ein Außengewindestift 52, der über eine Betätigungsöffnung 53 für einen Mehrkantschraubschlüssel zur manuellen Verdrehung zugänglich ist. Mit der Betätigungsöffnung 53 deckt sich eine Aussparung 54 im Randbereich der Innenwand 55 der Aufnahmetasche 48. Die Aussparung verläuft bezüglich der Mittelachse 56 des Stapelkanals 40 etwa radial. Dadurch ist gewährleistet, daß der Außengewindestift 52 nur dann zur Arretierung des Basisachskörpers 46 gegenüber der Schutzwandung 42 zugänglich ist, wenn er mit seiner Längsachse deckungsgleich mit der Aussparung 54 und damit ebenfalls radial liegt sowie eine definierte Drehstellung einnimmt. Das Kopfende des Basisachskörpers 46 ist durch ein Außengewinde 57 gebildet, über das der Greifkopf 47 mit einem komplementären Innengewinde aufschraubbar ist. Das Einschrauben des Greifkopfes 47 wird durch einen Begrenzungsanschlag 58 in axialer Richtung beschränkt, der im Beispiel als radiale Aufweitung oder Wulst gestaltet und im Bereich oder nächster Nähe zum Kopfende bzw. Außengewinde 57 des Basisachskörpers 46 angeordnet ist. Der Abstand der Anschlagseite 59 des Begrenzungsanschlags 58 zum Kopfend-Außengewinde 57 ist in Achsrichtung derart bemessen, daß bei maximal möglicher Einschraubtiefe unter Aufliegen des Begrenzungsanschlages 58 mit seiner Anschlagseite 59 auf der zugewandten Unterseite des Greifkopfes 47 die Innengewindebohrung 50 des Fußendes 49 nebst darin kämmenden Außengewindestift 52 und Betätigungsöffnung 53 gegenüber der radialen Stellung zur Stapelkanalmittelachse 56 verstellt bzw. verdreht ist. In dieser Stellung ist es nicht möglich, manuell mit einem Mehrkantschlüssel durch die Aussparung 54 und Betätigungsöffnung 53 einzugreifen und den Außengewindestift 52 so zu verdrehen, daß er gegen die Innenseite der Schutzwandung 42 innerhalb der Aufnahmetasche 48 drückt und so dem Basisachskörper feststellt und vor Verdrehung sichert. Erst wenn das Kopfende mit Außengewinde 57 des Basisachskörpers 46 vom Greifkopf 47 durch Zurückschrauben so gelockert ist, daß ein gewisser Abstand zwischen der Anschlagseite 59 des Begrenzungsanschlags 58 und der zugewandten Unterseite des Greifkopfs 47 besteht, können die Betätigungsöffnung 53 und der Außengewindestift 52 mit der radialen Aussparung 54 in der Innenwand 55 der Aufnahmetasche 48 so fluchten bzw. sich decken, daß eine manuelle Betätigung des Außengewindestifts 52 mit einem Mehrkantschlüssel möglich ist.

Gemäß Figur 9 hat das soeben erläuterte, nur lockere Aufschrauben des Greifkopfs 47 (ohne Anziehen und Feststellen gegenüber Verdrehen) die Wirkung einer freien Drehlagerung: Je nach Formtoleranzen eines aufzunehmenden Serienerzeugnisses oder Stapelgutes werden dem Greifkopf 47 Kräfte und Drehmomente erteilt, die durch eine freie Drehung 60 um die Längsrichtung bzw. Längsachse 51 des Basiskörpers 46 ausgeglichen werden können. In Figur 9 verläuft die genannte Längs- bzw. Drehachse 51 senkrecht zur Zeichenebene. Da zudem die Greifklinke 41 einen stielartig aus federndem Material gefertigten Basisachskörper 46 aufweist, können dem Greifkopf 47 elastisch federnde Pendelbewegungen 61, 62 sowohl in radialer Richtung von und zur Stapelkanalmittelachse 56 als auch tangential zur Umfangsrichtung der zylindrischen Grundform der Stapelhalteeinrichtung 2 erteilt werden. Dies erhöht die Effektivität des selbsttätigen Anschmiegens der Greifköpfe 47 an zu erfassendes Stapelgut. Die Innenseite der Schutzwandung 42 im dickeren Mantelabschnitt 43 bildet dabei einen Drehbegrenzungsanschlag 64, wodurch ein Ausschrauben des Greifkopfes 47 vom Kopfende des Basisachskörpers 46 verhindert ist. Ist die Greifklinke 41 aus bestimmten Gründen (Verschleiß, Beschädigung oder Umstellung auf anders gestaltetes Stapelgut) auszuwechseln, kann dies durch Lockern des Außengewindestiftes 52 gegenüber der Schutzwandung 42 und durch Herausziehen der Greifklinke 41 anhand des Greifkopfes 47 aus der Aufnahmetasche 48 schnell und einfach erfolgen. Die Neumontage einer Ersatzgreifklinke ist ebenfalls schnell und problemlos möglich, wobei lediglich die Betätigungsöffnung 53 am Fußende des Basisachskörpers 46 mit der radialen Aussparung 54 an der Aufnahmetaschen-Innenwandung 55 deckungsgleich bzw. fluchtend auszurichten ist, damit der Basisachskörper 46 an der Schutzwandung 42 abgestützt bzw. festgestellt werden kann. Ein weiteres Ausrichten oder Justieren des Greifkopfes 47 erübrigt sich, weil dieses im laufenden Betrieb aufgrund der Drehbewegungen 60 auf der freien Schraublagerung über das Kopfend-Außengewinde 57 selbsttätig je nach Abweichung innerhalb bestimmter Formtoleranzen des Stapelguts erfolgen kann.

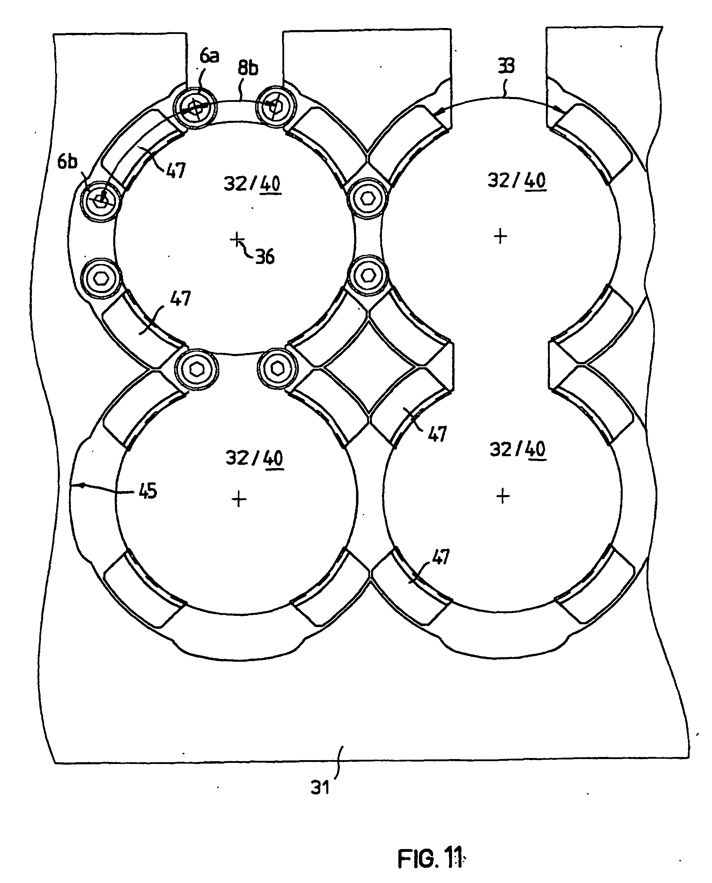

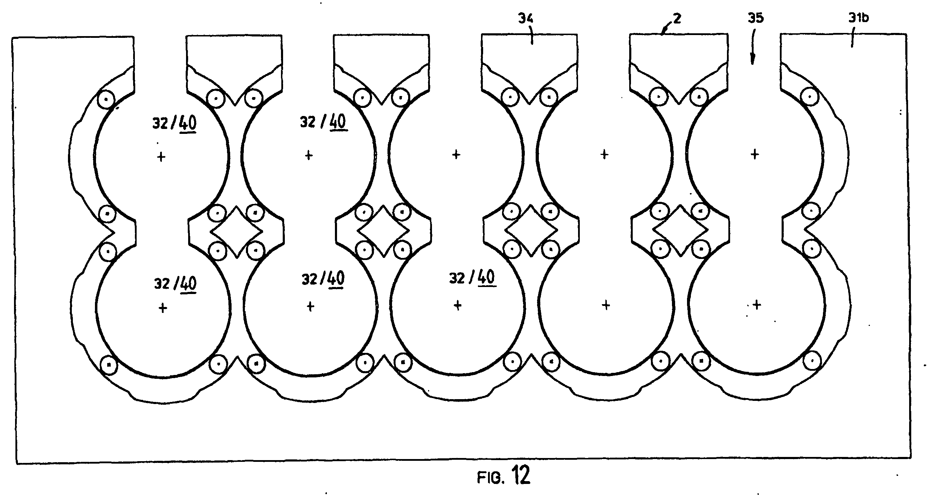

Die obigen Ausführungen gelten für die Figuren 11 und 12 analog, wobei insbesondere auf die Beschreibung der Figuren 6 und 8 mit dabei verwendeten Bezugszeichen verwiesen werden kann.

### Bezugszeichenliste

- 1: Fangeinrichtung
- 2: Stapeleinrichtung
- 3: Greifkörper
- 4a, 4b: Tragring
- 5a, 5b: Stirnseite
- 6a, 6b: Klemmdorn
- 7a: Umfangsrichtung
- 8a: großer Abstand
- 8b: kleiner Abstand
- 9a, 9b: Schnappstufe
- 10: Umfangserweiterung
- 11a, 11b: Umfangsabschnitt
- 12: achsparalleler Umfangsabschnitt
- 13: Linien
- 14: Kunststoffbecher
- 15: achsparalleler Umfangsabschnitt
- 16: konischer Verjüngungsabschnitt
- 17: Hohlraum
- 18: Befestigungsschraube
- 19: Außengewinde
- 20: Krallvorsprünge
- 21: Befestigungsflansch
- 22: Befestigungsschraube
- 23: Innenseite
- 24: Widerhakstufen
- 25: freies Ende
- 26: Rampenabschnitt
- 27: achsparalleler, erster Innenabschnitt
- 28: achsparalleler, zweiter Innenabschnitt
- 29: Öffnungsrund des Bechers
- 30: Hin- und Herbewegung
- 31a, 31b: Grundplatte
- 32: Aufnahmezelle
- 33: Umfangsabstand
- 34: oberer Rand
- 35: Aussparung
- 36: Symmentrielement
- 37: Symmentrielement
- 38: achsparalleler Umfangsabschnitt
- 39: Krallorgan
- 40: Stapelkanal
- 41: Greifklinke
- 42: Schutzwandung
- 43: dickerer Mantelabschnitt
- 44: dünnerer Mantelabschnitt
- 45: Einbuchtung
- 46: Basisachskörper
- 47: Greifkopf
- 48: Aufnahmetasche
- 49: Fußende
- 50: Innengewindebohrung
- 51: Längsrichtung
- 52: Außengewindestift
- 53: Betätigungsöffnung
- 54: Aussparung
- 55: Innenwand
- 56: Mittelachse
- 57: Außengewinde
- 58: Begrenzungsanschlag
- 59: Anschlagseite
- 60: Drehung
- 61: radiale Pendelbewegung
- 62: tangentiale Pendelbewegung
- 63: Schraubmittel
- 64: Drehbegrenzungsanschlag

## Patentansprüche

1. Stapelhalteeinrichtung zur Aufnahme von Serien-Erzeugnissen (14), insbesondere Kunststoff-Bechern, die nach ihrer Bildung in einem Form- und/oder Stanz-Werkzeug daraus ausgeworfen werden, mit mindestens einem Stapelkanal (40) und mit einem oder mehreren Krallorganen (39), welches oder welche parallel zum Stapelkanal (40) verlaufen, diesen umgeben und auf ihrer dem Stapelkanal (40) zugewandten Innenseite mit einem oder mehreren, jeweils rotatorisch und/oder translatorisch verstellbaren Greifklinken (41) zum Erfassen von Serien-Stückgütern, insbesondere Kunststoffbechern, versehen sind, und ferner das Krallorgan (39) eine die Greifklinke(n) (41) außenseitig umgebende Schutzwandung (42) aufweist, die derart ausgebildet und gegenüber der Greifklinke (41) mit einem Abstand derart angeordnet ist, dass die der Greifklinke (41) zugewandte Innenseite der Schutzwandung (42) einen Drehbegrenzungsanschlag (64) mit Drehspiel (60) für die Greifklinke (41) bildet, **dadurch gekennzeichnet, dass** die Greifklinke (41) im Rahmen des begrenzten Drehspiels (60) um eine Drehachse (51) frei drehbar gelagert ist, die parallel zum Stapelkanal (40) verläuft, so dass die Greifklinke (41) sich zum Erfassen des Erzeugnisses (14) weitgehend formbündig oder formschlüssig an die Herstellungskontur oder -gestalt des Erzeugnisses anschmiegen kann.

2. Stapelhalteeinrichtung nach Anspruch 1, **dadurch gekennzeichnet, dass** die Drehachse (51) durch einen Basiskörper (46) der Greifklinke (41) verläuft.

3. Stapelhalteeinrichtung nach einem der vorangehenden Ansprüche, **dadurch gekennzeichnet, dass** die Drehachse (46,51) der Greifklinke (41) innerhalb der Schutzwandung (42) aufgenommen ist und an ihrem freien Ende die Greifklinke (41) im Rahmen des begrenzten Drehspiels frei drehbar trägt.

4. Stapelhalteeinrichtung nach Anspruch 3, **dadurch gekennzeichnet, dass** die Schutzwandung (42) auf ihrer Innenseite mit einer zur Drehachse (46,51) führenden, vorzugsweise radial verlaufenden Öffnung oder Aussparung (54) versehen ist, um etwaige Mittel der Drehachse (46,51) zu ihrer Arretierung gegenüber der umgebenden Schutzwandung (42) zu betätigen.

5. Greifklinke für eine Stapelhalteeinrichtung, mit einer einem zu ergreifenden Erzeugnis (14) oder Stapelgut zugeordneten Innenseite (23) und einer rückwärtigen Außenseite, wobei auf der Innenseite (23) eine oder mehrere Hinterschneidungen, Stufen (24) oder Vertiefungen als Krallelemente oder Schubmittel für das Erzeugnis oder Stapelgut gebildet sind, **gekennzeichnet durch** eine körpereigene Drehachse (46,51), die mit einem länglichen Basiskörper (46) mit einem Kopf- und einem Fußende (57,49) realisiert ist, wobei am Kopfende (57) ein dem jeweiligen Stapelgut zugeordneter Greifkopf (47) so frei drehbar gelagert ist, dass der Greifkopf (47) sich zum Erfassen des Erzeugnisses (14) weitgehend formbündig oder formschlüssig an die Herstellungskontur oder -gestalt des Erzeugnisses (14) anschmiegen kann, und im mittleren Bereich des Basiskörpers (46) oder an dessen Fußende (49) Mittel (50,52) zur Arretierung an oder gegenüber der Stapelhalteeinrichtung (2) ausgebildet sind.

6. Greifklinke nach Anspruch 5, **dadurch gekennzeichnet, dass** der Basiskörper (46) mit elastisch und/oder federnd biegsamen Material hergestellt ist.

7. Greifklinke nach Anspruch 5 oder 6, **dadurch gekennzeichnet, dass** der Greifkopf (47) am Basiskörper (46) lösbar beziehungsweise abnehmbar angebracht und innenseitig in seiner Form und/oder Kontur an das zu erfassende Erzeugnis (14) oder Stapelgut angepaßt ist.

8. Greifklinke nach einem der vorangehenden Ansprüche, **dadurch gekennzeichnet, dass** der Greifkopf (47) auf dem Kopfende (57) über eine Schraubverbindung hin- und herdrehbar (60) angeordnet ist.

9. Greifklinke nach einem der vorangehenden Ansprüche, **dadurch gekennzeichnet, dass** die Arretierungsmittel (50,52) mit einem manuell schraubbaren Außengewindestift (52) und einer mit diesem in Eingriff stehenden, querverlaufenden und durchgehenden Innengewindebohrung (50) im mittleren Bereich oder am Fußende (49) des Basiskörpers (46) realisiert sind.

10. Greifklinke nach Anspruch 9, **dadurch gekennzeichnet, dass** der Basiskörper (46) für den Greifkopf (47) einen Einschraub-Begrenzungsanschlag (58) aufweist, der zu einem Einschraubgewinde am Kopfende (57) des Basiskörpers (46) einen derart bemessenen Abstand besitzt, dass bei Anschlag beziehungsweise Anliegen des Greifkopfes (47) am Begrenzungsanschlag (58) die Mittelachse der Innengewindebohrung (50) parallel zu einer gedachten Geraden verläuft, welche eine dem Erzeugnis (14) oder Stapelgut zugeordnete Seitenoberfläche des Greifkopfes (47) in einem schrägen Winkel durchsetzt.

## Claims

1. Stack holding device for receiving mass-produced products (14), in particular plastics cups, which after being made in a moulding and/or punching tool, are ejected therefrom, having at least one stacking channel (40) and one or more claw elements (39) which extend(s) parallel to the stacking channel (40), surround(s) the same and is/are provided on its/their inner face associated with the stacking channel (40) with one or more respectively rotary and/or translatory ratchets (41) for grasping mass-produced products, in particular plastics cups, and furthermore the claw element (39) has a protective wall (42) surrounding the ratchet(s) (41) on the outside, which wall is so formed and disposed with clearance over the ratchet (41) that the inner face of the protective wall (42) associated with the ratchet (41) forms a rotation-limiting stop (64) with rotary play (60) for the ratchet (41), **characterised in that** the ratchet (41) is mounted freely rotatably within the range of the limited rotary play (60) about a rotary shaft (51) which extends parallel to the stacking channel (40), so that the ratchet (41) can fit snugly or positively to the manufacturing contour or shape of the product (14) in order to grasp the same.

2. Stack holding device according to claim 1, **characterised in that** the rotary shaft (51) extends through a base body (46) of the ratchet (41).

3. Stack holding device according to one of the preceding claims, **characterised in that** the rotary shaft (46, 51) of the ratchet (41) is received within the protective wall (42) and supports the ratchet (41) freely rotatably at its free end within the range of the limited rotary play.

4. Stack holding device according to claim 3, **characterised in that** the protective wall (42) is provided on its inner face with a preferably radially extending aperture or recess (54) for guiding the rotary shaft (46, 51) in order to actuate any means of the rotary shaft (46, 51 ) for locking the same relative to the surrounding protective wall (42).

5. Ratchet for a stack holding device, having an inner face (23) associated with a product (14) or stacked goods to be grasped and a rear outer face, one or more undercuts, steps (24) or recesses being formed in the inner face (23) as claw elements or pushing means for the product or stacked goods, **characterised by** an integral rotary shaft (46, 51), which is formed by an elongate base body (46) with a top and bottom end (57, 49), wherein on the top end (57) a gripping head (47) allocated to the respective stacked goods is so supported in a freely rotatable manner that the gripping head (47) can fit substantially snugly or positively to the manufacture contour or shape of the product (14) in order to grasp the product (14), and in the central region of the base body (46) or at its bottom end (49) means (50, 52) are formed for locking to or with respect to the stack holding device (2).

6. Ratchet according to claim 5, **characterised in that** the base body (46) is manufactured from elastic and/or resiliently bendable material.

7. Ratchet according to claim 5 or 6, **characterised in that** the gripping head (47) is mounted detachably on the base body (46) and is adapted on the inside to the shape and/or contour of the product (14) to be grasped.

8. Ratchet according to one of the preceding claims, **characterised in that** the gripping body (47) is disposed on the top end (57) so as to rotate to-and-fro (60) via a screw connection.

9. Ratchet according to one of the preceding claims, **characterised in that** the locking means (50, 52) are formed by a manually screwable male-threaded rod (52) and a through female-threaded bore (50) meshing therewith and extending transversely in the middle region or at the bottom end (49) of the base body (46).

10. Ratchet according to claim 9, **characterised in that** the base body (46) for the gripping head (47) has a stop (58) to limit screwing in, which has such a distance from a screwing-in thread at the top end (57) of the base body that when the gripping head (47) meets or abuts the limit stop (58), the central axis of the female-threaded bore (50) extends parallel to a hypothetical straight line, which penetrates at an oblique angle a lateral surface of the gripping head (47) associated with the product (14) or stacked goods.

## Revendications

1. Dispositif de support d'empilements pour la réception de produits (14) de grande série, notamment des gobelets en matière plastique, qui après leur fabrication dans un outillage de formage et/ou de matriçage en sont éjectés, comprenant au moins un canal d'empilement (40) et un ou plusieurs organes à griffe (39) qui s'étend ou s'étendent parallèlement au canal d'empilement (40), entourent celui-ci et sont pourvus sur leur côté intérieur dirigé vers le canal d'empilement (40), d'un ou de plusieurs cliquets de préhension (41), pouvant être déplacé(s) respectivement en rotation et/ou en translation et destinés à saisir des objets au détail de grande série, notamment des gobelets en matière plastique, et l'organe à griffe (39) présentant par ailleurs une paroi de protection (42) qui entoure extérieurement le ou les cliquets de préhension (41) et est configurée et disposée à un espacement tel par rapport au cliquet de préhension (41), que le côté intérieur de la paroi de protection (42), dirigé vers le cliquet de préhension (41), forme une butée (64) de limitation de rotation avec jeu de rotation (60), pour le cliquet de préhension (41),
**caractérisé en ce que** le cliquet de préhension (41), dans la limite du jeu de rotation (60), est monté librement à rotation autour d'un axe de rotation (51) qui s'étend parallèlement au canal d'empilement (40) de sorte que le cliquet de préhension (41) peut, pour saisir le produit (14), épouser, dans une large mesure par complémentarité de forme ou liaison positive, le contour ou la configuration de fabrication du produit.

2. Dispositif de support d'empilements selon la revendication 1, **caractérisé en ce que** l'axe de rotation (51) s'étend à travers un corps de base (46) du cliquet de préhension (41).

3. Dispositif de support d'empilements selon l'une des revendications précédentes, **caractérisé en ce que** l'axe de rotation (46, 51) du cliquet de préhension (41) est reçu à l'intérieur de la paroi de protection (42), et porte, à son extrémité libre, le cliquet de préhension (41) qui tourne librement dans la limite du jeu de rotation.

4. Dispositif de support d'empilements selon la revendication 3, **caractérisé en ce que** la paroi de protection (42) est pourvue, sur son côté intérieur, d'une ouverture ou d'un évidement (54) conduisant vers l'axe de rotation (46, 51) et de préférence d'orientation radiale, en vue d'actionner d'éventuels moyens de l'axe de rotation (46, 51) pour son blocage par rapport à la paroi de protection (42) environnante.

5. Cliquet de préhension pour un dispositif de support d'empilements, présentant un côté intérieur (23) tourné vers le produit (14) ou à la marchandise empilable à saisir, et un côté extérieur arrière, un ou plusieurs gradins (24), creux ou contre-dépouilles étant formés sur le côté intérieur (23) en tant qu'éléments à griffe ou moyens de poussée pour le produit ou la marchandise empilable, **caractérisé par** un axe de rotation (46, 51) propre au corps du cliquet de préhension, qui est réalisé avec un corps de base (46) allongé comportant une extrémité de tête et une extrémité de pied (57, 49), une tête de préhension (47) tournée vers le produit à empiler considéré étant montée librement en rotation à l'extrémité de tête (57), de sorte que la tête de préhension (47) peut, pour saisir le produit (14), épouser, dans une large mesure par complémentarité de forme ou liaison positive, le contour ou la configuration de fabrication du produit (14), et des moyens (50, 52) pour le blocage sur ou par rapport au dispositif de support d'empilements (2) sont réalisés dans la zone centrale du corps de base (46) ou à son extrémité de pied (49).

6. Cliquet de préhension selon la revendication 5, **caractérisé en ce que** le corps de base (46) est réalisé en un matériau élastique et/ou flexible de manière élastique.

7. Cliquet de préhension selon la revendication 5 ou 6, **caractérisé en ce que** la tête de préhension (47) est montée de manière démontable ou amovible sur le corps dé base (46), et est adaptée sur le côté intérieur, quant à sa forme et/ou son contour, au produit (14) ou à la marchandise empilable à saisir.

8. Cliquet de préhension selon l'une des revendications précédentes, **caractérisé en ce que** la tête de préhension (47)est agencée sur l'extrémité de tête (57) par l'intermédiaire d'une liaison à vis (60), en pouvant tourner selon un mouvement de va et vient.

9. Cliquet de préhension selon l'une des revendications précédentes, **caractérisé en ce que** les moyens de blocage (50, 52) sont réalisés par une cheville à filetage extérieur (52) pouvant être vissée manuellement, et par un alésage à filetage intérieur (50) traversant, et s'étendant transversalement, dans la zone centrale ou à l'extrémité de pied (49) du corps de base (46), et en prise avec ladite cheville.

10. Cliquet de préhension selon la revendication 9, **caractérisé en ce que** le corps de base (46) comporte pour la tête de préhension (47), une butée (58) de limitation de vissage qui présente par rapport à un taraudage de vissage à l'extrémité de tête (57) du corps de base (46), une distance d'une valeur telle, que pour la venue en butée ou l'appui de la tête de préhension (47) sur la butée de limitation (58), l'axe médian de l'alésage à filetage intérieur (50) s'étend parallèlement à une droite fictive, qui traverse selon un angle oblique une surface latérale de la tête de préhension (47) tournée vers le produit (14) ou la marchandise empilable.
